# EUROPEAN PATENT SPECIFICATION

(11) **EP 0 323 267 B1**
(45) Date of publication and mention of the grant of the patent: **15.02.1995**
(21) Application number: 88312423.2
(22) Date of filing: 30.12.1988
(51) Int. Cl.: C08G 63/66, C08G 63/68

(54) **Thermoplastic polyetherester copolymers**
Thermoplastische Polyetherester-Copolymere
Copolymères de polyétherester thermoplastiques

(30) Priority: 31.12.1987 KR 8715680
(43) Date of publication of application: 05.07.1989
(73) Proprietor: Kolon Industries Inc., Jung-gu Seoul (KR)
(72) Inventor: Kim, Kyung Min, Kumi-si Kyungsangbuk-do (KR); Lee, Sang Jin, Kumi-si Kyungsangbuk-do (KR)
(74) Representative: Lawrence, Peter Robin Broughton

(56) References cited:
- US-A- 4 013 624

## Description

This invention relates to thermoplastic polyetherester copolymers having good heat resistance, good low temperature impact resistance, and good elastic recovery properties.

Polyetherester copolymers have been proposed for various industrial uses, especially because of their possibility of good impact resistance and processability.

Typical copolymers of this type have hard and soft segments wherein the hard segments comprise recurring formulae of structure I and the soft segments comprise recurring formulae of structure II. 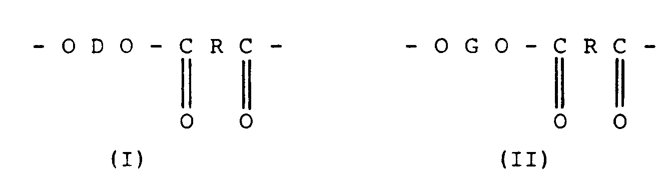
wherein D is the non-hydroxylic residue of a saturated cyclic diol or aliphatic glycol containing 2 to 8 carbon atoms, R is the non-carboxylic residue of an aromatic, aliphatic or cyclic dicarboxylic acid and G is a polyether having recurring oxyalkylene units and a molecular weight between about 300 and 4,000.

Polymers of this type and thermoplastic polyurethanes have been used for manufacturing high functionality houseware materials. Polymers of this type have been used as films, high elastic fibres, and for injection moulding. When used for injection moulding, such as extrusion and blow moulding, the polymer must meet severe quality and performance conditions such as high melt viscosity and melt strength.

In conventional polyetheresters, it is common for the acid to be terephthalic acid or a mixture with isophthalic acid or aliphatic saturated dicarboxylic acid. The diol conventionally has been ethylene glycol or 1,4-butane diol optionally with other aliphatic diol, while the polyether has conventionally been polyethylene glycol, polypropylene glycol or polytetramethylene glycol.

Unfortunately, such polyetherester copolymers have only been satisfactorily used at temperatures of 100°C or less due to lack of thermostability, non-uniform strength through the thickness of the articles and inadequate recovery properties, possibly due to unsatisfactory crystallisation properties.

In U.S. 4,013,624, polyetherester copolymers are described that are branched as a result of including in the monomers, from which the polymer is made, a branching agent in an amount of 0.3 to 1.2 equivalents per 100 mole of dicarboxylic acid. The branching agent is a material that has at least three functional groups selected from hydroxyl and carboxyl groups. When the corresponding polymer was made in the absence of the branching agent, an increase in the degree of polymerisation resulted in an increase in the intinsic viscosity of the linear polymer and in a reduction of the proportion of terminal groups. However when the polymerisation was conducted in the presence of the branching agent the content of terminal groups was increased and the thermostability of the product was decreased. The condensation reaction time and the flowability of the product was decreased.

A polyetherester according to the invention is a copolymer which comprises recurring units of structure I and recurring units of structure II 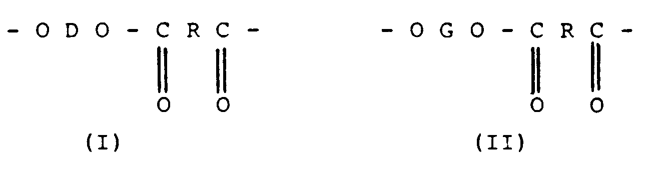
wherein D is the non-hydroxylic residue of a saturated aliphatic or cyclic diol having 2 to 8 carbon atoms, R is the non-carboxylic residue of an aromatic, aliphatic or cyclic dicarboxylic acid having a molecular weight less than about 500, and G is a polyether having recurring oxyalkylene units and a molecular weight from about 300 to about 4,000, and the polyetherester is branched as a result of having been made from monomers that include a branching agent, and is characterised is that the branching agent comprises a, primary or secondary amine and in that the amount of branching agent is 0.1 to 0.6 mole percent based on the total amount of acid from which the residues R are derived, and the amount of amine branching agent is at least 0.1 mole %.

The units of structure I form hard segments or blocks and the units of structure II form soft segments or blocks. The hard and soft segments can be randomly arranged and so the polymers can be described as random block copolymers.

The random block copolymer of the invention has improved processing and performance qualities. As a result it can give improved results when exposed to difficult processing conditions such as extrusion and blow moulding. It has improved heat stability and melt viscosity. The invention includes moulded articles, for instance films or other extruded articles or blow moulded articles, formed from the copolymer.

The copolymer of the invention can have good softness and can have elastic recovery properties similar to a rubber, but can be superior to a rubber as regards its low temperature impact resistance, chemical resistance and its mechanical properties. Thus it can combine the performance and processing properties of rubber and of plastic materials. In general it can have excellent thermoplastic properties of the type that would be associated with a polymer that only has physical cross links within the polymeric structure, in preference to the properties normally associated with chemical cross linked, or cured, low density rubbers.

It might have been expected that the ratio of physical cross linkage in the invention would tend to result in reduced hardness, heat resistance, endurance and thermostability. However, the inclusion of the amine branching agent results in improved thermostability, melt viscosity and melt strength.

Preferably D is the divalent radical remaining after removal of the hydroxyl groups from compounds such as ethylene glycol, 1,2-propane diol, 1,3-propane diol, 1,4-butane diol, 1,5-pentane diol, 1,6-hexane diol and 1,4-cyclohexane dimethanol.

Preferably, R is the divalent radical remaining after removal of carboxyl groups from acids such as terephthalic acid, isophthalic acid, orthophthalic acid, adipic acid, suberic acid, azelaic acid, sebacic acid, 1,4-cyclohexane dicarboxylic acid. Instead of providing R by reacting an acid it can, of course, be provided in the reaction product from derivatives that will react in a similar manner, for instance alkyl esters such as C₁₋₈, usually C₁₋₄, alkyl esters.

Preferably G is the divalent radical remaining after removal of pendant hydroxyl groups from poly (alkylene oxide) glycols having molecular weight from about 300 to 4,000, such as poly (ethylene oxide) glycol, poly (propylene oxide) glycol and poly (tetramethylene oxide) glycol.

Preferably the hard segment is formed only from the recurring units of formula I and the soft segment is formed only of recurring units of formula II.

Preferably the proportion of the hard segment is about 20 to 95% by weight of the copolymer. Reducing the amount renders the copolymer more rubbery.

The selection of the polyether influences the properties of the final product since a hydrophilic polyether such as one derived from polyethylene glycol is superior to products based on polypropylene glycol or polytetramethylene glycol as regards oil resistance, whereas a polymer based on polypropylene glycol or polytetramethylene glycol is superior as regards hydrolysis resistance to one based on polyethylene glycol.

The branching agent modifies the thermostability and melt strength. The amount is usually 0.1 to 0.6 mole percent based on the acid component (or its ester derivative). If the amount is below 0.1 mole % the desired improvements are not obtained and if the amount is above 0.6 mole % processability and mechanical properties can deteriorate.

The primary or secondary amine branching agent that is used in the invention should contain three or more functional groups, at least one of the functional groups being a primary or secondary amine. Other functional groups are usually selected from hydroxyl and carboxyl. Suitable amines include diethanol amine, hexamethylene bis (imino acetic acid), tricine, D- or DL -cerine, DL-threonine hemihydrate, DL-aspartic acid, DL-2-methyl glutamic acid, DL-2-aminoadipic acid, tris (hydroxy methyl) aminomethane. The amount of amine branching agent is usually at least 0.1 mole % and is usually at least half the total amount of branching agent.

The branching agent may consist of the amine branching agent or it may include also branching agents that contain three or more functional groups which are all selected from hydroxyl and carboxyl groups, such as hexaglycerol, trimellitic acid, trimellitic anhydride, pentaerythritol, glyceric acid, gluconic acid and glucoheptonic acid.

The polymer of the invention can be made by a technique such as the following. The glycol, polyether and acid components that produce the residues D, R and G are charged with appropriate catalysts, heat stabilisers and other additives to a reactor vessel. Water, methanol or other condensation products are distilled out from the reaction mixture as the temperature is raised to a value in the range 200 up to 230°C. Pressure is gradually reduced to 5mmHg or less and the temperature slowly raised up to 250 to 280°C. The polymerisation mass is stirred and the reaction is subsequently stopped and the product separated from the reaction vessel.

Suitable catalysts for the reaction include organic titanates such as tetraalkyltitanate used alone or in combination with magnesium or calcium acetates. Complex titanates, such as Mg[HTi(OR)₆]₂, derived from alkali or alkaline earth metal alkoxides and titanate esters are also very effective. Inorganic titanates such as lanthanum titanate, calcium acetate and antimony trioxide mixtures and lithium and magnesium alkoxides are representative of other catalyst which can be used.

The presence of the ether components is important in order that the melt viscosity and melt strength is less than would be possessed by the corresponding polyester homopolymer, since the polyether component has a low degree of crystallisation and a high fluidity.

A problem with conventional random block copolymers is their inadequate recovery properties when tensile strength or compressive stress is released, and this is thought to be due to the high crystallisation of the polymer as this tends to freeze the structure. If the deformation is too large then there is permanent deformation of the polymer.

As a result of the defined branching in the invention, the forces can be distributed more uniformly throughout the structure without destroying the thermoplastic properties of the product. The amount of chemical cross linking can be sufficiently low that the melt viscosity and melt strength can be increased as a result of increased entanglement of polymer chains whilst maintaining thermoplastic properties. If too much cross linking agent is used, it can cause curing of the polymer and loss of thermoplastic properties.

The use of the amine cross linking agent means that highly thermostable products can be obtained since the branching is achieved without a significant increase in hydroxyl and carboxyl terminal groups.

The following are examples.

Catalysts A and B are prepared as follows. An agitated flask is charged with 95 weight percent of ethylene glycol and 5 weight percent of tetrabutyl titanate. Agitation is started and the mixture is refluxed at 50°C for about 3 hours or more. The product is a slurry of catalyst (A).

In order to make a slurry of catalyst (B), the above method is essentially repeated except that 95 weight percent of 1,4-butandiol is used instead of 95 weight percent of ethylene glycol.

Heat Resistants A and B are prepared as follows: 20 g of 3,7-dioctyl phenothioazine, 40 g of dilauryl thiodipropionate, 24 g of 1,1,3-tris (2-methyl-4-hydroxy-5-tert-butyl pehnyl)butane are mixed with ethylene glycol. The product is a slurry of 1 kg of thermal stabiliser (A). The above method is repeated except that 1,4-butane diol instead of ethylene glycol to prepare a slurry of l kg of stabiliser (B).

In the Examples, the following abbreviations are used for polyfunctional components:
- HMBI: : Hexamethylene bis(iminoacetic acid)
- DEA: : Diethanol amine
- TRI: : Tricine
- THAM: : Tris(hydroxyl methyl)amino methane
- DLA: : DL-2-amino adipic acid
- DLM: : DL-2-methyl glutamic acid
- HG: : Hexaglycerol
- TMA: : Trimellitic anhydride
- PER: : Pentaerythritol
Other abbreviations that are used are
- DMT: : Dimethyl terephthalate
- EG: : Ethylene glycol
- PEG: : Poly(ethylene oxide) glycol, average molecular weight : 1540
- PTMG: : Poly(tetramethylene oxide) glycol, average molecular weight : 1000
- PPG: : Poly(propylene oxide) glycol, average molecular weight : 1000
- DMI: : Dimethyl isophthalate
- DMS: : Dimethyl sebacate
- BD: : 1,4-butane diol
- DMCD: : 1,4-Dimethyl cyclohexane dicarboxylate (trans isomer : 96.5%)
- CHDM: : 1,4-Cyclohexane dimethanol (trans isomer : 45%)
Physical properties are measured as follows:
The intrinsic viscosity is measured in dl/g in orthochlorophenol at 30°C. The melt viscosity is measured in poise useing RDS-7700 of Rheometrics at 220°C, except for the values in Table 2 which are measured at 225°C. The melting point is measured by a differential scanning calorimeter [DSC].

Tensile strength : Measured in accordance with ASTM D-412, Crosshead Velocity 500 mm/min
Elongation at break : Measured in accordance with ASTM D-412.

Hardness : Shore-type data measured by a Durometer.

### Example 1

A stainless steel reactor is charged with 432.6 g of dimethyl terephthalate, 211.7 g of ethylene glycol, 682.4 g of poly(ethylene oxide) glycol having an average molecular weight of 1540, 0.9 g of HMBI and 0.8 g of HG, 11 g of catalyst slurry (A) and 12 g of heat resistant slurry (A). Agitation is started and methanol is distilled as temperature is raised from 150 to 230°C.

The temperature is maintained at 230°C until the methanol has distilled off. When the distillation is finished, the pressure is gradually reduced to 0.5 mmHg within 30 minutes and, at the same time, the final temperature of the reactor is gradually raised to 270°C and polycondensation is continued while removing the excess glycol. After the reactor temperature is maintained at 270°C for 45 minutes, the resulting polymer is extracted in a nitrogen atmosphere and dried at reduced pressure.

The properties of the final polymer are measured and the results are in Table 1.

### Examples 2 to 4

Example 1 is essentially repeated but using the compositions of reactants which are shown in Table 1.

### Comparative Example 1

Example 1 is essentially repeated but using the compositions of reactants and polyfunctional components which are shown in Table 1.

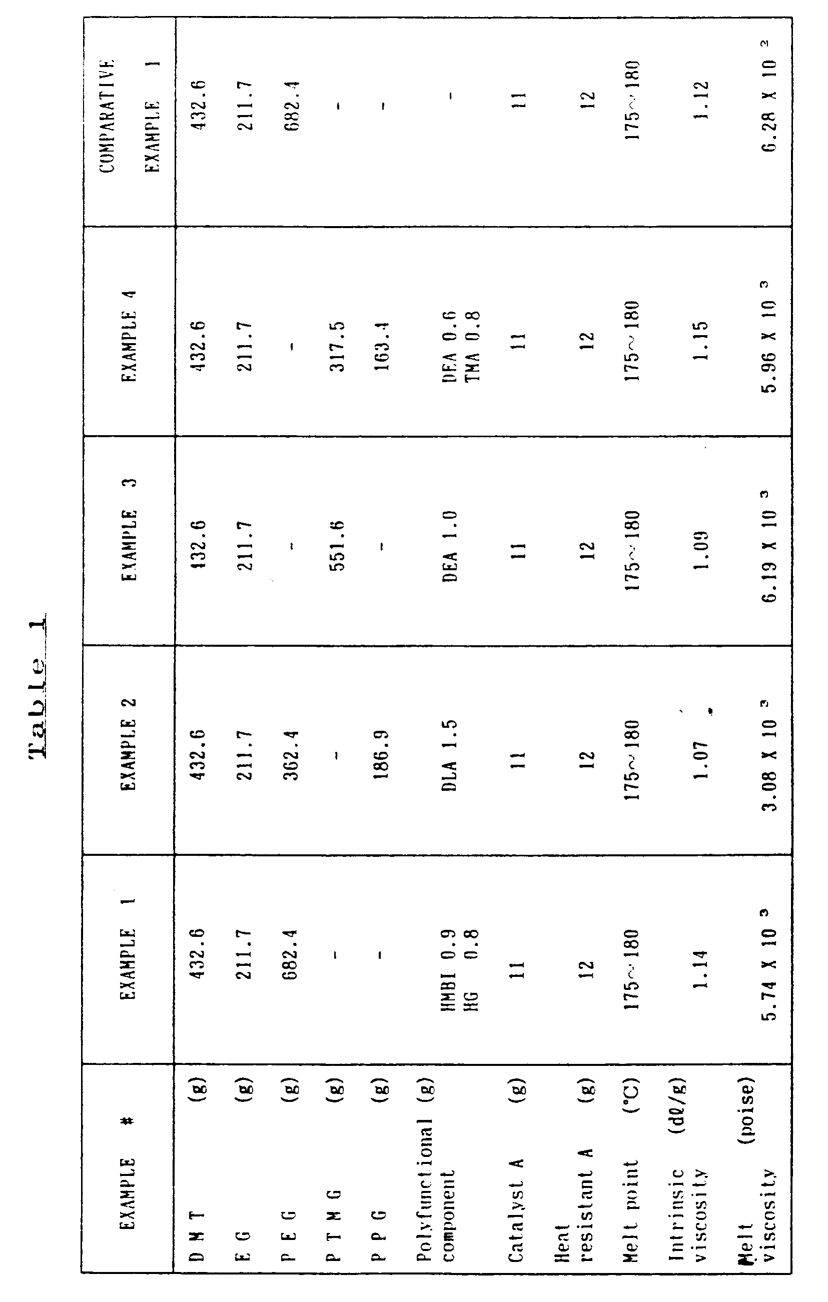

### Examples 5 to 8 and Comparative Example 2

Example 1 is essentially repeated but using the compositions of Table 2, and the final temperature of reactor is 270°C.

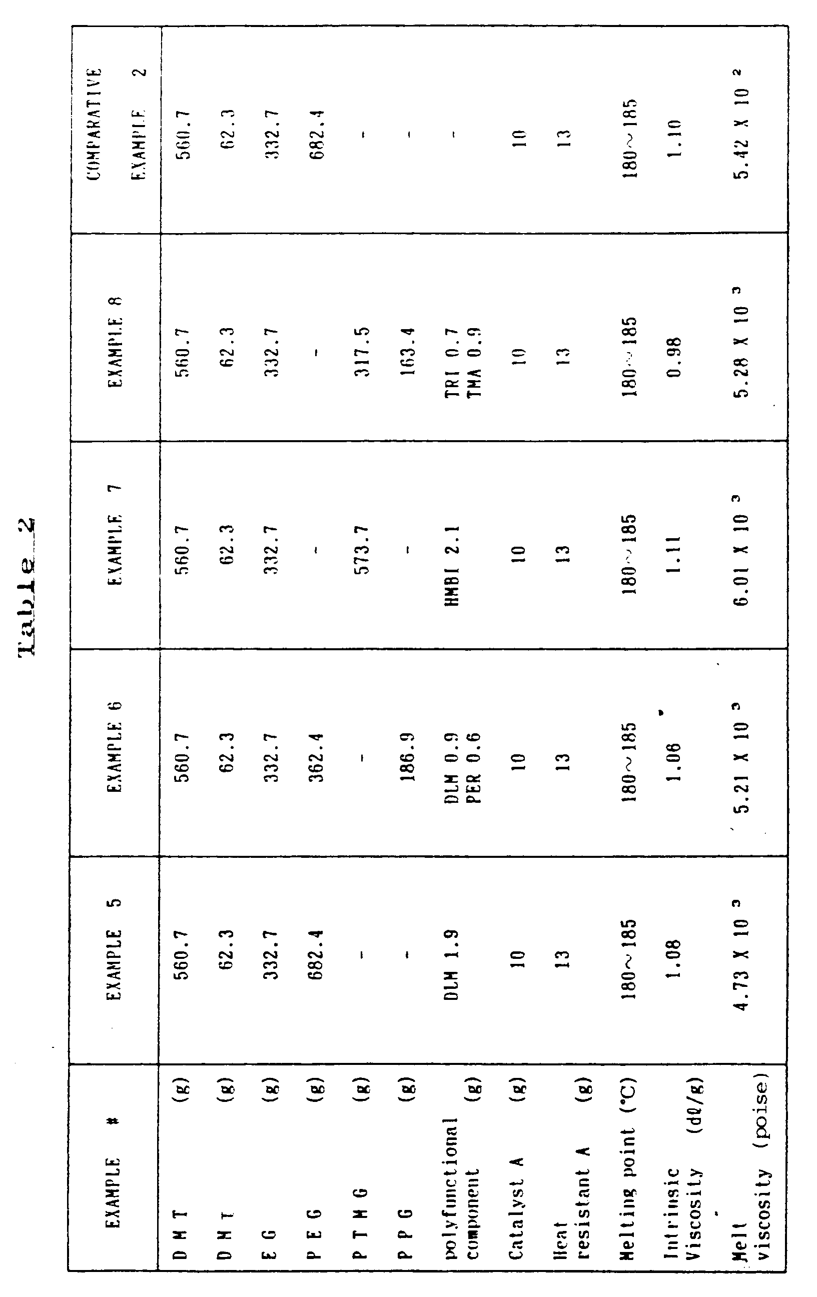

### Examples 9 to 12 and Comparative Example 3

Example 1 is essentially repeated but using the compositions of Table 3, and the final temperature of reactor is 270°C.

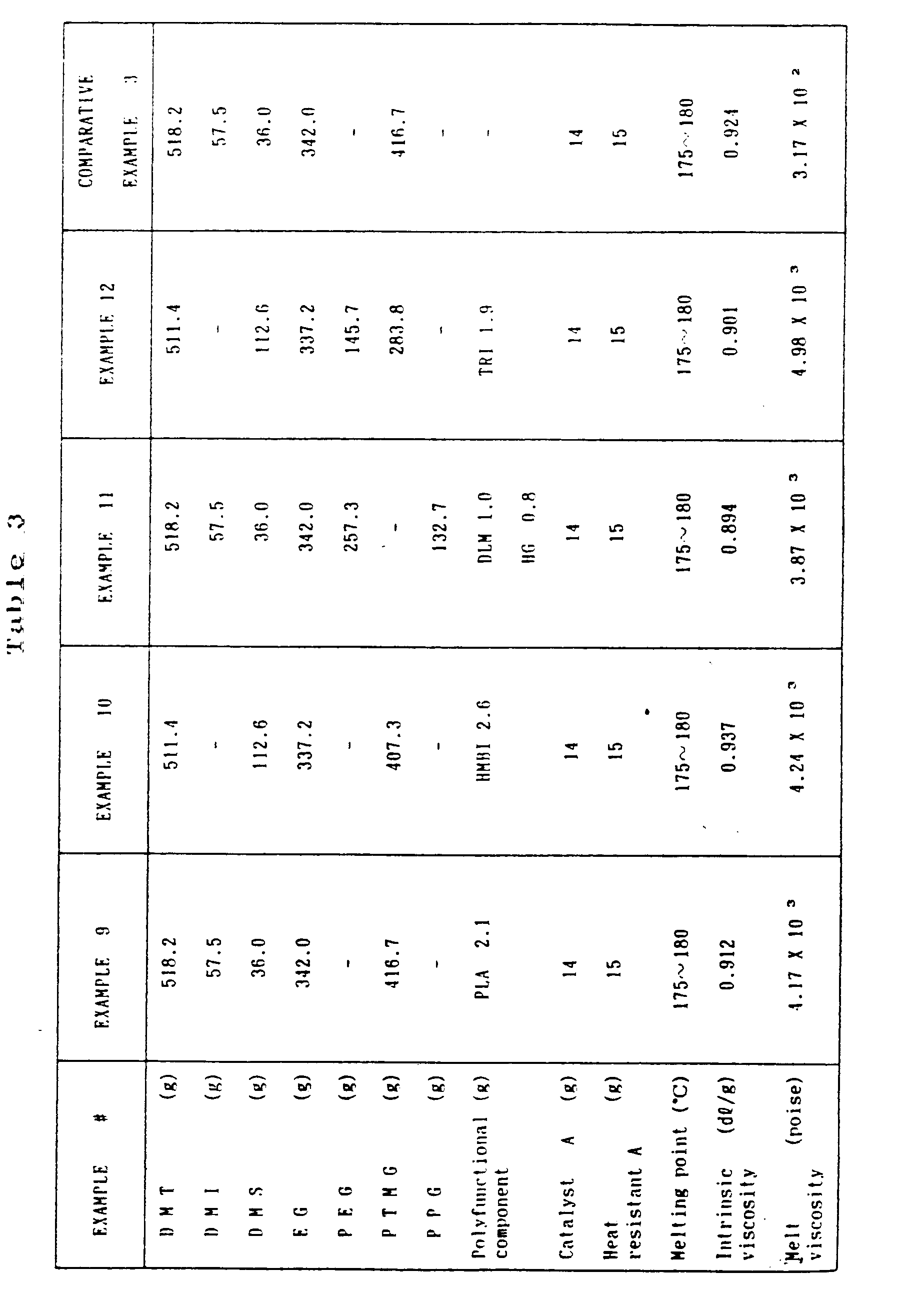

### Examples 13 to 32 and Comparative Examples 4 to 8

Example 1 is essentially repeated but using the compositions of Tables 4 to 8 and the final temperature is 260°C.

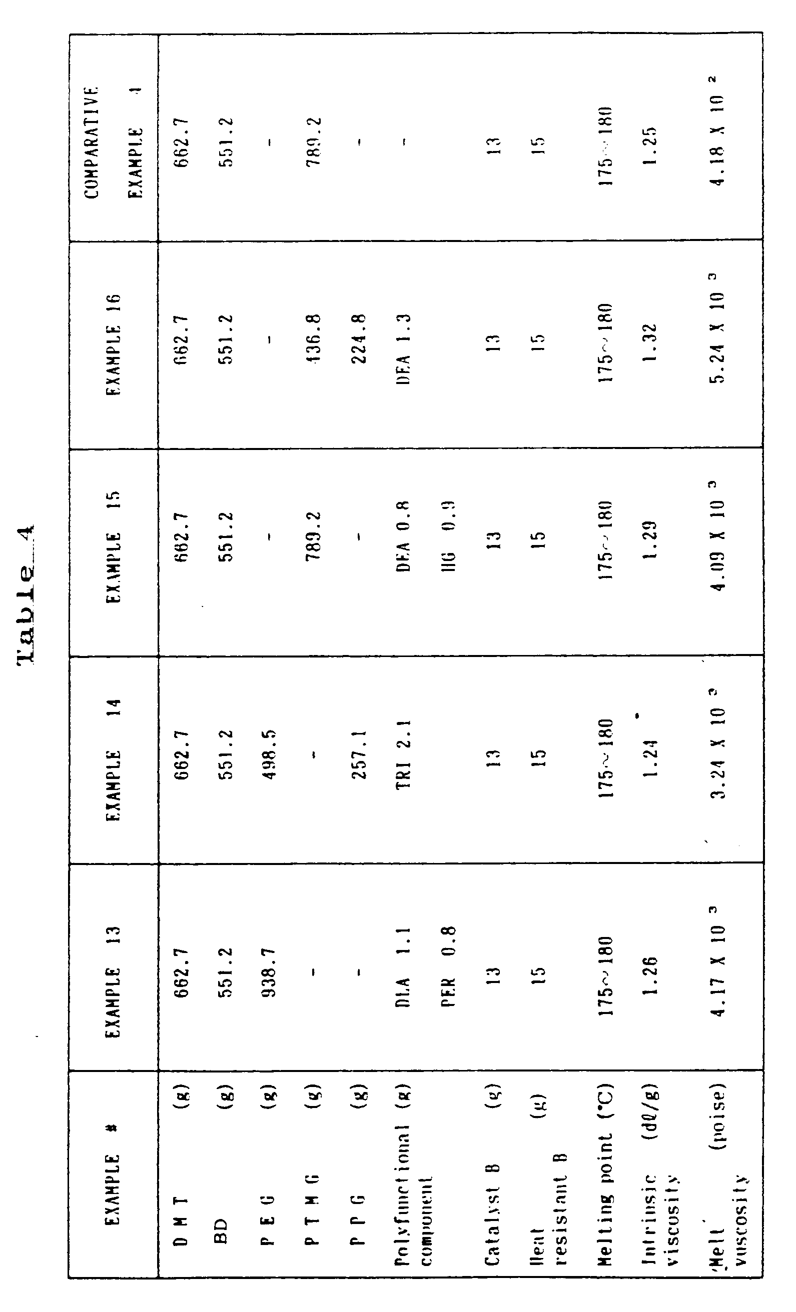

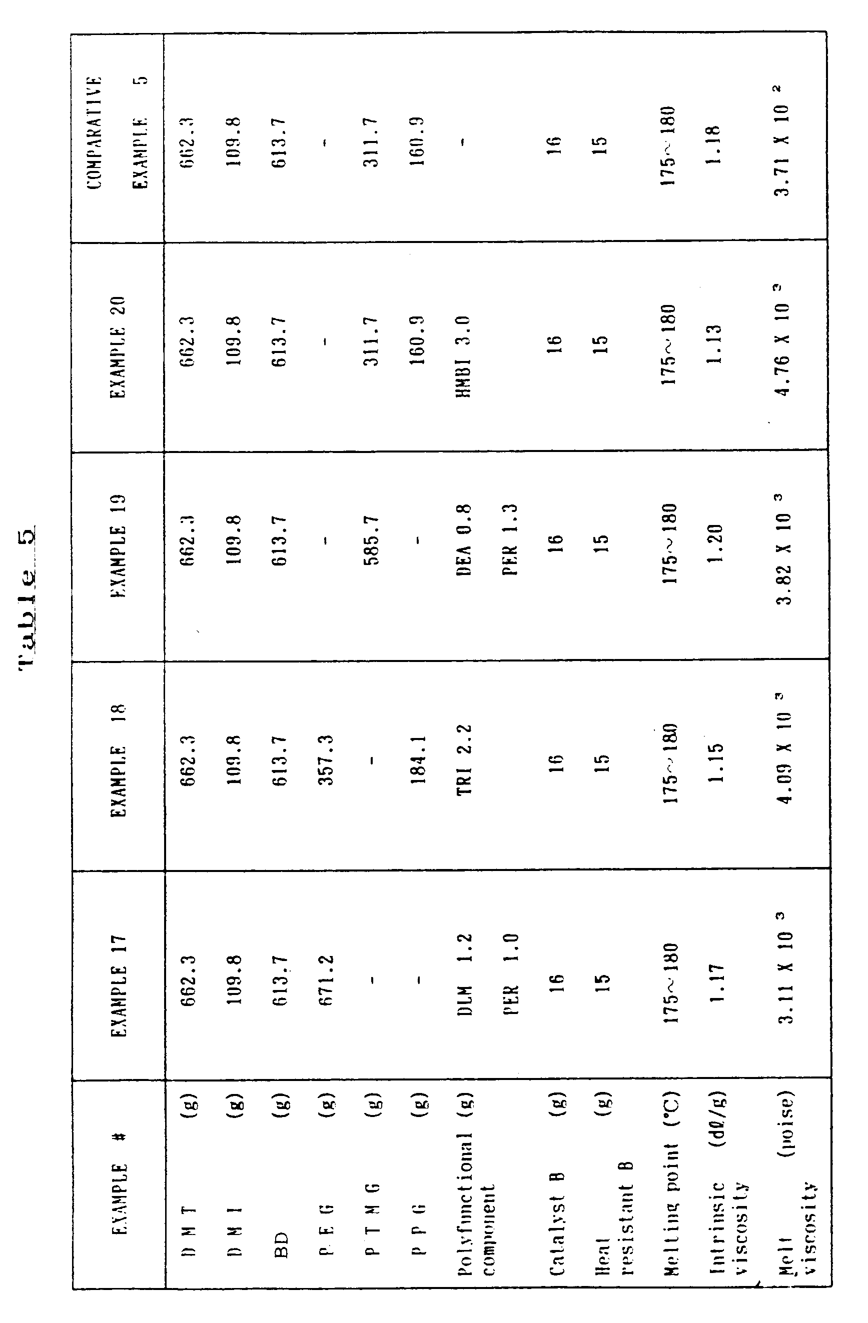

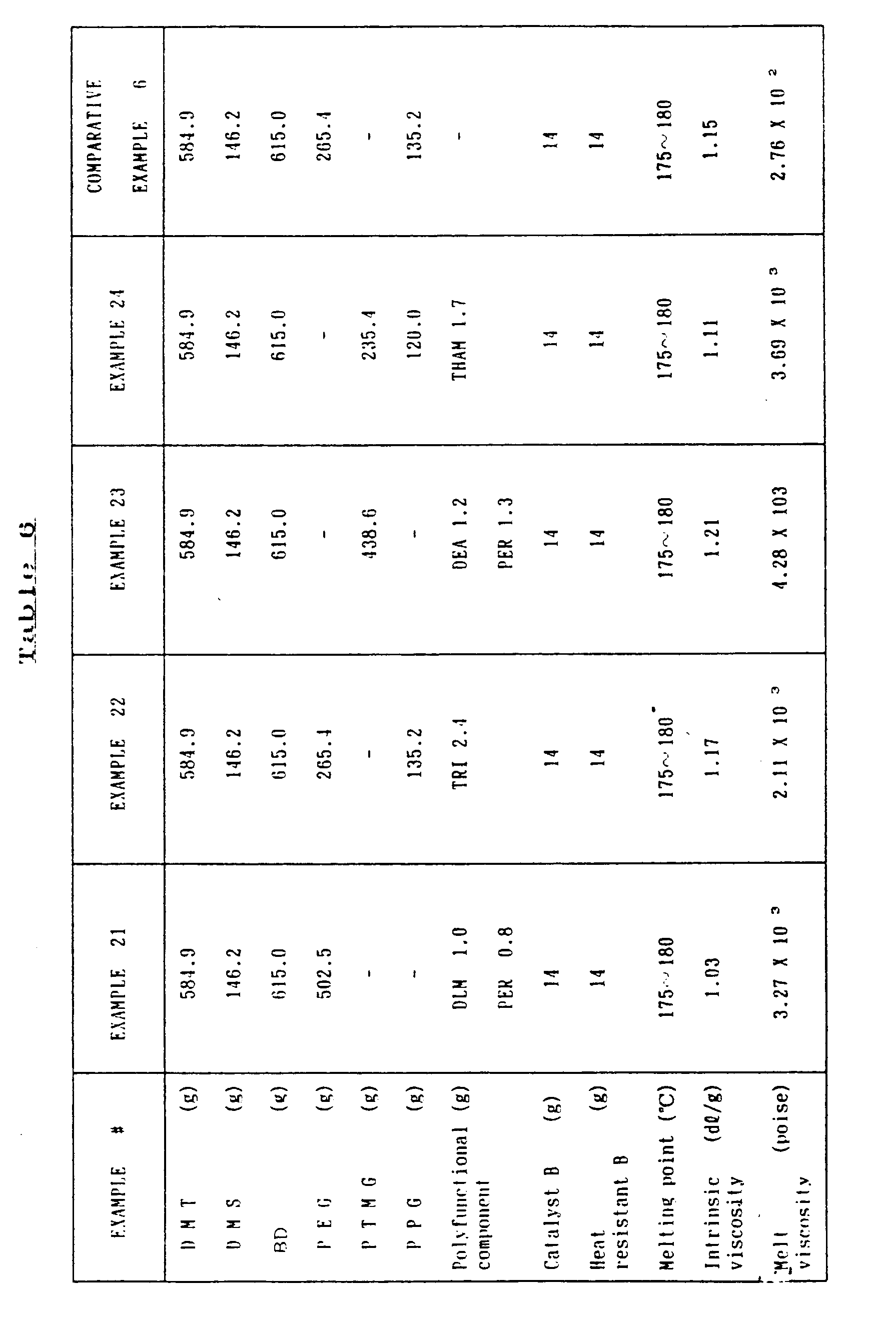

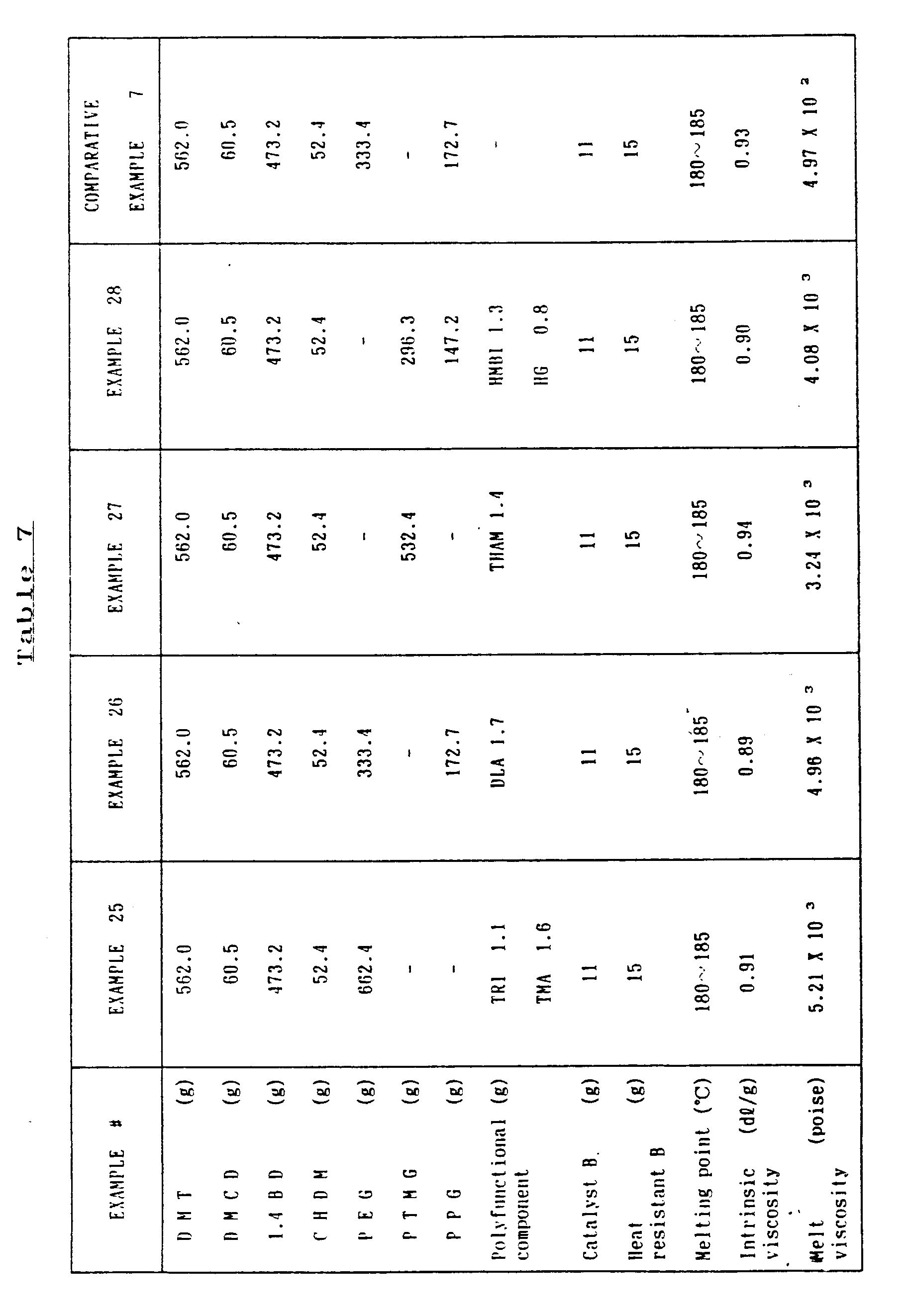

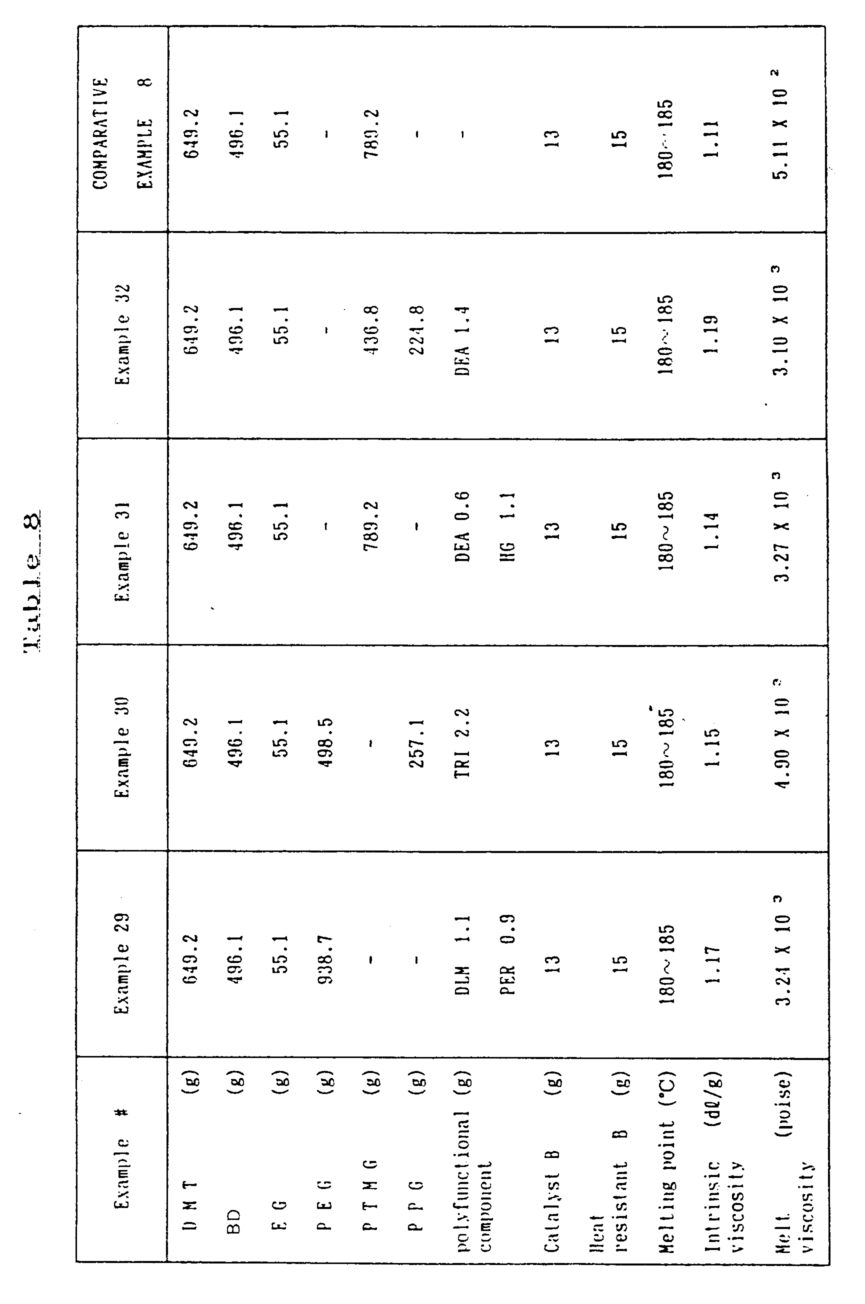

### Example 33

The reactor is charged with 378 g of DMT, 166 g of DMI, 400 g of PIMG having an average molecular weight of 2000, 378 g of 1.4 BP, 15 g of catalyst slurry B, 15 g of heat resistant B and 0.88 g of DEA (0.3 mole % per methyl ester of acid component). The final polymer (melting point 178°C) is prepared by the method of Example 1 but the final temperature of the reactor is 260°C. The polymer is extruded into sheets and the properties are measured on the sheets. The properties are shown in Table 9.

**Table 9**

| EXAMPLE # | EXAMPLE 33 |
|---|---|
| intrinsic Viscosity(dl/g) | 1.10 |
| Tensile Strength ( kg/cm² ) | 334 |
| Elongation at break (%) | 770 |

### Example 34 and Comparative Examples 9 and 10

The process of Example 33 is essentially repeated except that the reactor is charged with 278.9 g of DMT, 91.4 g of SMI, 287 g of EG, 224 g of PEG having an average molecular weight of 1540, 15 g of catalyst slurry A and 15 g of heat resistant slurry.

Also, 0.460 g of THAM and 0.510 g of HG (total polyfunctional component is 0.4 mole % per ester component) is used in Example 34; 0.035 g of THAM and 0.038 g of HG (total polyfunctional component is 0.03 mole % per ester component) is used in Comparative Example 9; and 3.470 g of THAM and 3.830 g of HG (total polyfunctional component is 3.0 mole % per ester component) is used in Comparative Example 10. The results are shown in Table 10.

**Table 10**

| EXAMPLE # | EXAMPLE 34 | COMPARATIVE EXAMPLE | |
|---|---|---|---|
| | | 9 | 10 |
| intrinsic Viscosity(dl/g) | 1.32 | 1.28 | 1.49 |
| Tensile Strength ( kg/cm² ) | 452 | 402 | 267 |
| Elongation at break (%) | 810 | 620 | 340 |

### Examples 35 and 36

The polymers of Examples 5 and 9 respectively are heated at 250°C and the change of melt viscosity according to the change of time is measured and shown in Table 11.

### Comparative Examples 11 and 12

The polymers of Comparative Examples 2 and 3 respectively are heated at 250°C and the change of melt viscosity according to the change of time is measured and shown in Table 11.

**Table 11**

| Time (min) | EXAMPLE 35 | COMPARATIVE EXAMPLE 11 | EXAMPLE 36 | COMPARATIVE EXAMPLE 12 |
|---|---|---|---|---|
| first stage | 2.11x10³ | 3.67x10² | 1.67x10³ | 2.86x10² |
| 10 | 2.09x10³ | 2.69x10² | 1.66x10³ | 2.02x10² |
| 20 | 2.05x10³ | 1.57x10² | 1.65x10³ | 1.15x10² |
| 30 | 1.97x10³ | 6.06x10 | 1.47x10³ | 4.19x10 |
| 40 | 1.63x10³ | not measured | 1.32x10³ | not measured |

### Example 37

The process of Example 1 is essentially repeated except that the reactor is charged with 720 g of DMT, 440 g of BD, 460 g of PTMG having an average molecular weight of 1000, 1.0 g of DEA as a polyfunctional component, 44.7 g of catalyst slurry B and 34 g of heat resistant, repeated, and the final temperature of the reactor is 250°C.

### Comparative Example 13

The above Example 37 is essentially repeated except 2,7 g of trimethyl trimellitate is used instead of polyfunctional component DEA.

### Comparative Example 14

Example 37 is essentially repeated except that the reactor is charged with 720 g of DMT, 440 g of BD, 460 g of PTMG having an average molecular weight of 1000, 0.852 g of glycerol as a polyfunctional component, 3.5 g of sym-di-β-naphthyl-phenylene diamine, and a catalyst slurry of BD containing 21.6 weight percent of tetrabutyl titanate and 5.4 weight percent of a dry solution of magnesium acetate.

The data for the polymer of Example 37 and Comparative Examples 13 to 14, such as condensation time, characteristic viscosity, content of final group and properties are shown in Table 12, and the change of melt viscosity at 250°C is shown in Table 13.

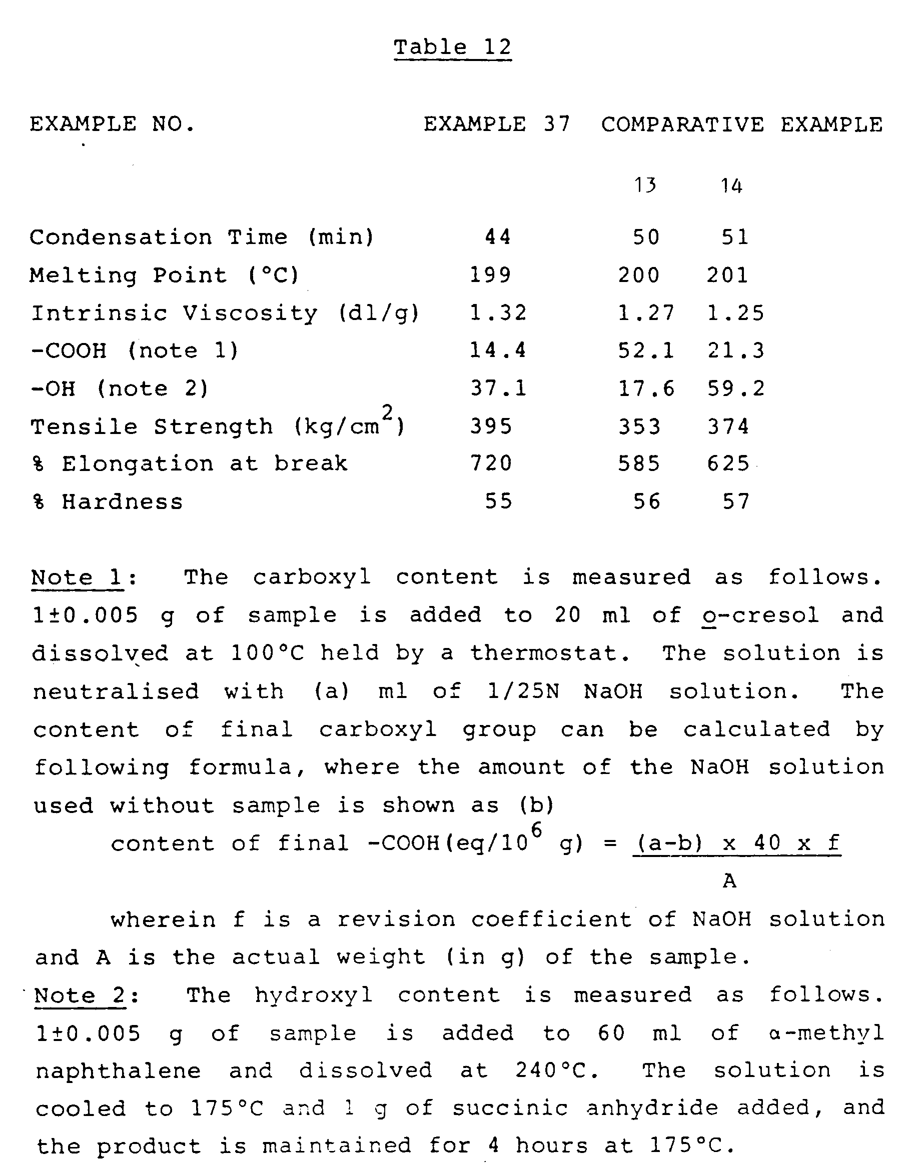

Ethanol is added and the precipitate is extracted. The ethanol is dried at 85°C. The method is repeated 2 or 3 times for perfect reaction and the extract is dried thoroughly after washing several times with ethanol.

The content of carboxyl group (C) in the precipitate is measured by the method of Note 1.

The content of the carboxyl group (d) in the starting material is measured by the method of Note 1. The content of the hydroxyl group -OH(eq/10⁶g) = (c - d).

Because it is difficult to ensure full reaction between the hydroxyl group of the polymer chain and succinic anhydride a long reaction time is required. Accuracy can be improved by performing the test 10 times and using the average of the five having the highest yield.

**Table 13**

| Time (min) | EXAMPLE 37 | COMPARATIVE EXAMPLE | |
|---|---|---|---|
| | | 13 | 14 |
| first stage | 1.32 | 1.27 | 1.25 |
| 20 | 1.30 | 1.42 | 1.14 |
| 40 | 1.28 | 1.39 | 1.03 |
| 60 | 1.20 | * | 0.93 |
| 80 | 1.15 | * | * |
| * : Not measured because of degradation by thermal oxidation. | | | |

## Claims

1. A polyetherester that is a copolymer which comprises the recurring units of structure I and recurring units of structure II 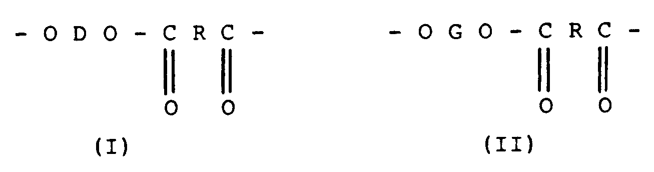 wherein D is the non-hydroxylic residue of a saturated aliphatic or cyclic diol having 2 to 8 carbon atoms, R is the non-carboxylic residue of an aromatic, aliphatic or cyclic dicarboxylic acid having a molecular weight less than about 500, and G is a polyether having recurring oxyalkylene units and a molecular weight of 300 to 4,000, and the polyetherester is branched as a result of having been made from monomers that include a branching agent, and is characterised in that the branching agent comprises a primary or secondary amine and in that the amount of branching agent is 0.1 to 0.6 mole percent based on the total amount of acid from which the residues R are derived, and the amount of amine branching agent is at least 0.1 mole %.

2. A polyetherester according to claim 1 in which the amine is selected from diethanol amine, hexamethylene bis (imino acetic acid), tricine, D- or DL- cerine, DL-threonine hemihydrate, DL-aspartic acid, DL-2-methyl glutamic acid, DL-2-amino adipic acid and tris (hydroxyl methyl) amino methane.

3. A polyetherester according to claim 1 or claim 2 in which the branching agent also comprises a branching agent having three or more functional groups selected from hydroxyl and/or carboxyl.

4. A polyetherester according to claim 3 in which the branching agent comprises a compound selected from hexaglycerol, trimellitic acid, trimellitic anhydride, pentaerythritol, glyceric acid, gluconic acid, glucoheptonic acid.

5. A polyetherester according to any preceding claim in which D is the residue of a compound selected from ethylene glycol, 1,2-propane diol, 1,3-propane diol, 1,4-butane diol, 1,5-pentane diol, 1,6-hexane diol and 1,4-cyclohexane dimethanol, R is the residue of an acid selected from terephthalic acid, isophthalic acid, orthophthalic acid, adipic acid, suberic acid, azelaic acid, sebacic acid, 1,4-cyclohexane dicarboxylic acid and G is the residue of compound selected from poly (ethylene oxide) glycol, poly (propylene oxide) glycol and poly (tetramethylene oxide) glycol.

6. A polyetherester made by condensation polymerisation of the saturated aliphatic or cyclic diol defined in claims 1 or 5, the aromatic, aliphatic or cyclic dicarboxylic acid defined in claims 1 or 5 or a reactive derivative thereof, and the polyether defined in claims 1 or 5 in the presence of a branching agent the amount of branching agent is 0.1 to 0.6 mole percent based on the total amount of acid from which the residues R are derived, and the amount of amine branching agent is at least 0.1 mole % as defined in any of claims 1 to 4.

7. A method of making a polyetherester comprising condensation polymerisation of the saturated aliphatic or cyclic diol defined in claims 1 or 5, the aromatic, aliphatic or cyclic dicarboxylic acid defined in claims 1 or 5 or a reactive derivative thereof, and the polyether defined in claims 1 or 5 in the presence of a branching agent the amount of branching agent is 0.1 to 0.6 mole percent based on the total amount of acid from which the residues R are derived, and the amount of amine branching agent is at least 0.1 mole % as defined in any of claims 1 to 4.

8. A moulded article formed of a polyetherester according to any of claims 1 to 6.

## Patentansprüche

1. Polyetherester, welcher ein Copolymer ist, das umfaßt die wiederkehrenden Einheiten mit der Struktur I und die wiederkehrenden Einheiten mit der Struktur II 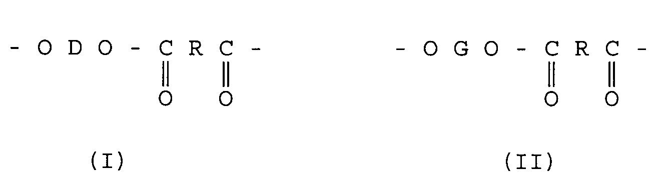 worin D der nicht-hydroxylische Rest eines gesättigten aliphatischen oder cyclischen Diols mit 2 bis 8 Kohlenstoffatomen ist, R für den nicht-carboxylischen Rest einer aromatischen, aliphatischen oder cyclischen Dicarbonsäure mit einem Molekulargewicht von weniger als etwa 500 steht und G ein Polyether mit wiederkehrenden Oxyalkyleneinheiten und einem Molekulargewicht von 300 bis 4000 ist, und der Polyetherester als Ergebnis davon, daß er aus Monomeren, die ein Verzweigungsmittel einschlossen, hergestellt wurde, verzweigt ist, und dadurch gekennzeichnet ist, daß das Verzweigungsmittel ein primäres oder sekundäres Amin umfaßt und daß die Menge an Verzweigungsmittel 0,1 bis 0,6 Molprozent bezogen auf die Gesamtmenge an Säure, von der die Reste R abgeleitet sind, beträgt und die Menge an Amin-Verzweigungsmittel mindestens 0,1 Molprozent ist.

2. Polyetherester nach Anspruch 1, in welchem das Amin ausgewählt ist aus Diethanolamin, Hexamethylenbis(iminoessigsäure), Tricin, D- oder DL-Cerin, DL-Threoninhemihydrat, DL-Asparaginsäure, DL-2-Methylglutaminsäure, DL-2-Aminoadipinsäure und Tris(hydroxylmethyl)aminomethan.

3. Polyetherester nach Anspruch 1 oder Anspruch 2, in dem das Verzweigungsmittel auch ein Verzweigungsmittel mit drei oder mehr funktionellen Gruppen, ausgewählt aus Hydroxyl und/oder Carboxyl, umfaßt.

4. Polyetherester nach Anspruch 3, in dem das Verzweigungsmittel eine Verbindung umfaßt, die ausgewählt ist aus Hexaglycerin, Trimellitsäure, Trimellitsäureanhydrid, Pentaerythrit, Glycerinsäure, Gluconsäure, Glucoheptonsäure.

5. Polyetherester nach irgendeinem vorangehenden Anspruch, in dem D der Rest einer aus Ethylenglycol, 1,2-Propandiol, 1,3-Propandiol, 1,4-Butandiol, 1,5-Pentandiol, 1,6-Hexandiol und 1,4-Cyclohexandimethanol ausgewählten Verbindung ist, R der Rest einer aus Terephthalsäure, Isophthalsäure, Orthophthalsäure, Adipinsäure, Suberinsäure, Azelainsäure, Sebacinsäure, 1,4-Cyclohexandicarbonsäure ausgewählten Säure ist und G der Rest einer aus Poly(ethylenoxid)glycol, Poly(propylenoxid)glycol und Poly(tetramethylenoxid)glycol ausgewählten Verbindung ist.

6. Polyetherester, hergestellt durch Kondensationspolymerisation des in den Ansprüchen 1 oder 5 definierten gesättigten aliphatischen oder cyclischen Diols, der in den Ansprüchen 1 oder 5 definierten aromatischen, aliphatischen oder cyclischen Dicarbonsäure oder eines reaktiven Derivats davon und des in den Ansprüchen 1 oder 5 definierten Polyethers in Anwesenheit eines Verzweigungsmittels, wobei die Menge an Verzweigungsmittel 0,1 bis 0,6 Molprozent bezogen auf die Gesamtmenge an Säure, von der die Reste R abgeleitet sind, beträgt und die Menge an Amin-Verzweigungsmittel mindestens 0,1 Molprozent ist, wie in irgendeinem der Ansprüche 1 bis 4 definiert.

7. Verfahren zur Herstellung eines Polyetheresters, umfassend die Kondensationspolymerisation des in den Ansprüchen 1 oder 5 definierten gesättigten aliphatischen oder cyclischen Diols, der in den Ansprüchen 1 oder 5 definierten aromatischen, aliphatischen oder cyclischen Dicarbonsäure oder eines reaktiven Derivats davon und des in den Ansprüchen 1 oder 5 definierten Polyethers in Anwesenheit eines Verzweigungsmittels, wobei die Menge an Verzweigungsmittel 0,1 bis 0,6 Molprozent bezogen auf die Gesamtmenge der Säure, von der die Reste R abgeleitet sind, beträgt und die Menge an Amin-Verzweigungsmittel mindestens 0,1 Molprozent ist, wie in irgendeinem der Ansprüche 1 bis 4 definiert.

8. Formgegenstand, gebildet aus einem Polyetherester gemäß irgendeinem der Ansprüche 1 bis 6.

## Revendications

1. Polyétherester qui est un copolymère comprenant les motifs récurrents de structure I et des motifs récurrents de structure II 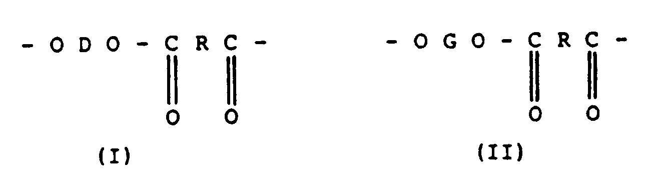 formules dans lesquelles D représentent le reste non hydroxylique d'un diol saturé, aliphatique ou cyclique, ayant 2 à 8 atomes de carbone ; R représente le reste non carboxylique d'un acide dicarboxylique aromatique, aliphatique ou cyclique ayant un poids moléculaire inférieur à environ 500 ; et G représente un polyéther ayant des motifs oxyalkylène récurrents et présentant un poids moléculaire de 300 à 4 000, et le polyétherester est réticulé par suite de sa production à partir de monomères qui comprennent un agent de réticulation, ce produit étant caractérisé en ce que l'agent de réticulation est constitué par ou comprend une amine primaire ou secondaire et en ce que la quantité de l'agent de ramification est de 0,1 à 0,6 mol %, sur la base de la quantité totale d'acide dont dérivent les restes R et la quantité de l'amine, agent de réticulation, vaut au moins 0,1 mol %.

2. Polyétherester selon la revendication 1, dans lequel l'amine est choisi parmi la diéthanolamine, l'hexaméthylène bis(acide imino acétique), la tricine, la D- ou la DL-cérine, la DL-thréonine hemihydraté, l'acide DL-aspartique, l'acide DL-2-méthylglutamique, l'acide DL-2-amino adipique et le tris(hydroxylméthyl)aminométhane.

3. Polyétherester selon la revendication 1 ou la revendication 2, dans lequel l'agent de ramification comprend également un agent de ramification comportant trois ou plus de trois groupes fonctionnels, parmi un groupe hydroxyle et/ou un groupe carboxyle.

4. Polyétherester selon la revendication 3, dans lequel l'agent de ramification comprend un composé choisi parmi l'hexaglycérol, l'acide trimellitique, l'anhydride trimellitique, le pentaérythritol, l'acide glycérique, l'acide gluconique, l'acide glucoheptonique.

5. Polyétherester selon l'une quelconque des revendications précédentes, dans lequel D représente le reste d'un composé choisi parmi l'éthylène glycol, le 1,2-propane diol, le 1,3-propane, diol, le 1,4-butane diol, le 1,5-pentane diol, le 1,6-hexane diol, le 1,4-cyclohexane diméthanol, R est le reste d'un acide choisi parmi l'acide téréphtalique, l'acide isophtalique, l'acide orthophtalique, l'acide adipique, l'acide subérique, l'acide azélaïque, l'acide sébacique, l'acide 1,4-cyclohexane dicarboxylique, et G représente le reste d'un composé choisi parmi du poly(oxyde d'éthylène)glycol, du poly(oxyde de propylène)glycol et du poly(oxyde de tétraméthylène)glycol.

6. Polyétherester produit par polymérisation par condensation du diol saturé, aliphatique ou cyclique défini à la revendication 1 ou à la revendication 5, de l'acide dicarboxylique aromatique, aliphatique ou cyclique défini à la revendication 1 ou à la revendication 5, ou d'un dérivé réactif de ces composés, et du polyéther défini au revendication 1 ou 5, en présence d'un agent de ramification, la quantité de l'agent de ramification étant de 0,1 à 0,6 mol %, sur la base de la quantité totale de l'acide dont les restes R dérivent, et la quantité de l'amine, agent de ramification, est d'au moins 0,1 mol %, cet agent de ramification étant tel que défini dans l'une quelconque des revendications 1 à 4.

7. Procédé de production d'un polyétherester, comprenant la polymérisation par condensation du diol saturé, aliphatique ou cyclique, défini au revendication 1 ou 5, de l'acide dicarboxylique aromatique, aliphatique ou cyclique défini au revendication 1 ou 5, ou d'un dérivé réactif de ces composés, et du polyéther défini au revendication 1 ou 5, en présence d'un agent de ramification (la quantité de l'agent de ramification étant de 0,1 à 0,6 mol %, sur la base de la quantité totale de l'acide dont les restes R dérivent, et la quantité de l'amine, agent de réticulation valant au moins 0,1 mol %, cet agent étant tel que défini dans l'une quelconque des revendications 1 à 4.

8. Article moulé, formé d'un polyétherester selon l'une quelconque des revendications 1 à 6.
